(19)

Europäisches
Patentamt
European
Patent Office
Office européen
des brevets

(11) **EP 4 464 671 A1**

(12) **EUROPEAN PATENT APPLICATION**

(43) Date of publication:
**20.11.2024 Bulletin 2024/47**

(21) Application number: **23173342.9**

(22) Date of filing: **15.05.2023**

(51) International Patent Classification (IPC):
**C02F 11/15** (2019.01)   **C02F 11/04** (2006.01)
**C02F 1/66** (2023.01)   **C02F 11/14** (2019.01)
**C02F 1/36** (2023.01)

(52) Cooperative Patent Classification (CPC):
**C02F 11/15; C02F 1/66; C02F 11/04;** C02F 1/36;
C02F 11/143; C02F 2209/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(27) Previously filed application:
**25.10.2017 RO 201700870**

(71) Applicant: **National Research and Development Institute for**
**Industrial Ecology - ECOIND**
**060652 Bucharest (RO)**

(72) Inventors:
• **Stefanescu, Mihai**
  **Bucharest (RO)**
• **Bumbac, Costel**
  **Bucharest (RO)**
• **Dinu, Laurentiu Razvan**
  **Bucharest (RO)**
• **Cosma, Cristiana**
  **Bucharest (RO)**
• **Patroescu, Ion Viorel**
  **Bucharest (RO)**

(54) **COMBINED ULTRASONIC AND ALKALINE PRETREATMENT METHOD OF WASTEWATER TREATMENT PLANT SLUDGE FOR THE IMPROVEMENT OF BIOGAS PRODUCTION BY ANAEROBIC FERMENTATION**

(57)    The invention concerns a combined process of ultrasonic alkaline treatment of biological sludge from the wastewater treatment plants before the anaerobic digestion for enhanced of biogas production.

The main treatment steps of the sludge are:
**Sludge homogenization** - **Alkaline digestion with**
**NaOH** - **Ultrasonication** - **Anaerobically digestion**

Ultrasonic application, with or without alkaline digestion led to a half insemination time, the transformation of at least 50% of organic load as CODCr into biogas, and twice a higher biogas amount with methane 70% content.

EP 4 464 671 A1

**Description**

The invention is referring to a combined treatment of municipal wastewater treatment (WWTP) sludge by alkaline ultrasonication as a pretreatment process before anaerobic fermentation for biogas production.

The diminishing and capitalization of the sludge begin in municipal wastewater treatment plants during specific treatment phases of anaerobic fermentation (widespread in the case of large and medium WWTPs) and dewatering.

The improvement of the biogas generation process involves the fermentation of the sludge with high organic matter content in the soluble phase which can be achieved by the pretreatment step. The most pretreatment methods of biological sludge are as follows [1,2]:

- mechanical methods including the cavitation effect: increase dewatering sludge capacity, the soluble organic load as COD, decreases the volatiles, and increases the capacity of biogas generation by anaerobic fermentation;
- thermal methods: one hour of heating to 90 $^{0}$C of the sludge followed by cooling to fermentation temperature led to a 20 times increase in biogas production (highly expensive method as energetic consumption);
- chemical and electrochemical methods (e.g., Fenton oxidation);
- combined methods.

This invention is a combined process of ultrasonic cavitation (applied to biological sludge) and alkaline digestion in specific operational conditions: pH, alkaline digestion time, ultrasonic energy, ultrasonication time, alternation of the pretreatment cycle alkaline digestion + ultrasonication, etc.

Alkaline digestion of biological sludge is one of the classical ways of organic matter solubilization in order to increase the biogas amount after anaerobic fermentation [3]. Combining it with ultrasonication at different pH values and alternate cycles is the essence of this invention.

The application leads to the minimization of the anaerobic fermentation phase: 20-50 reaction days, low conversion of initial organic load (20-50%), and the energy requirement for keeping the optimal temperature of biological processes (especially in the winter season) [4].

The quantitative evaluation of the ultrasonic field effects can be done with physical, chemical, and biological indicators. It is difficult to analyze and compare the efficiencies of WWTP's sludge ultrasonication because of different operating parameters: operating frequency of ultrasonic field, dry substance content, organic load, operating temperature, etc. [5].

The application of direct (simple) ultrasonication and alkaline ultrasonication, taking into account the characteristics of the sludge and temperature, has the following advantages:

- the application of ultrasonic for the pretreatment of WWTP sludge leads to the release of heat which is used and diminishing the additional heating of the sludge, before the anaerobically fermentation phase;
- because of the solubilization of organic load during ultrasonication and alkaline digestion, there are created improved conditions for anaerobic digestion - the increasing biogas production in case of sludge with lower organic content (because of low COD and BOD content in wastewater of small and medium communities);
- the transformation time of organic matter into biogas becomes shorter with an influence on the economic efficiency of the process;
- the entire pretreatment process, including the alternance of simple ultrasonication and ultrasonication + alkaline digestion can be automated and integrated into the classic treatment flow of a wastewater treatment plant.

It is presented below **an example of an ultrasonic combined pretreatment process,** according to the invention, for an activated biological sludge from a municipal wastewater treatment plant (medium size).

Brief description of drawing

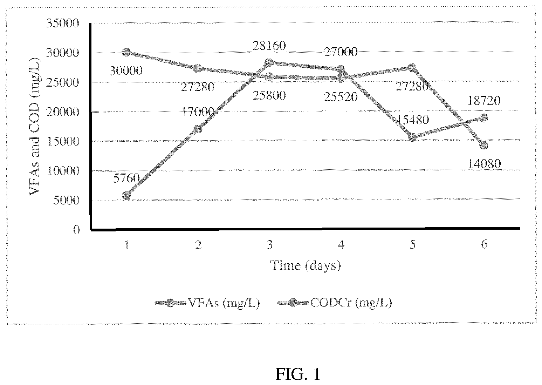

Fig.1 presents the variation in time of VFAs and CODCr in the pretreated sludge

In order to perform the evaluation of the invention it was calculated the indicators of solubilization degree - SD and disintegration degree - DD for operating conditions according to the following formulas:

- 
  - SD = (COD dissolved after ultrasonication - COD dissolved initial sample) x 100/COD homogeneous initial sample;

- DD = (COD dissolved after ultrasonication - COD dissolved initial sample) x

100/(COD homogeneous initial sample - COD dissolved initial sample).

Likewise, it highlighted the evolution of global organic load (CODCr) after centrifugation of ultrasonicated samples for each experimental test. *The values of COD of centrifugated samples are considered to be representative of the study of sludge characteristics evolution during the next phase of biological fermentation because the development of specific anaerobic bacteria is mainly based on dissolved nutrients.*

The initial sludge has pH = 5.14 and the organic load was COD = 54560 mg $O_2$/L and 11616 mg $O_2$/L in homogeneous and dissolved phases, respectively.

The evolution of SD, DD, and COD in time was estimated based on the values on the day of each test.

The ultrasonic disintegration tests were performed in the ultrasonic reactor based on an ultrasound generator at 20 kHz with stainless steel reaction vessel having a water cooling jacket. The alkaline digestion/ultrasonication was in the frame of pH = 8.5 - 10.5. The pH corrections were with NaOH 50%.

Table 1 emphasized the results of ultrasonication tests of different pH values.

Table 1 Comparative results of alkaline ultrasonication

| Crt. no. | Test conditions | | | Main indicators | |
|---|---|---|---|---|---|
| | pH, US | Time US, min. | Energy US, kJ | SD, % | DD, % |
| 1 | 6.0 | 45 | 9000 | 6.8 | 7.7 |
| 2 | 6.5 | 45 | | 7.3 | 9.2 |
| 3 | 8.5 | 10 | | 11 | 13.9 |
| 4 | 10.5 | 10 | | 23.5 | 28.3 |

The analysis of solubilization and disintegration degrees for different pH values (6; 6.5; 8.5; 10.5) shows the following:

- in the case of selected low pH values 6.0/6.5 the higher solubilization and disintegration degrees were: SD = 6.8 - 7.3%, DD = 7.7 - 9.2 for 45 ultrasonication time;
- the increase of reaction pH to a weak alkaline domain (pH = 8.5) led to the rise of SD and DD to 11% and 13.9% respectively for a short ultrasonication time and the same ultrasonic characteristics;
- the alkaline ultrasonic pretreatment (pH = 10.5) led to the best results. The solubilization and disintegration degrees were 3 - 4 times higher than the ultrasonication test at pH 6.0 - 6.5 for 10 minutes reaction time;
- all the sludge samples after ultrasonication had pH 7 - 7.5, optimal for biological fermentation and biogas production.

On the other hand, the efficiency of ultrasonic pretreatment of WWTP's sludge was proved by anaerobically fermentation tests in bioreactors with 5 l total capacity and 3 l of sludge inside (37 °C). The concentrations of both volatile fat acids (VOAs) and COD were periodically monitored.

The treatment of WWTPs sludge was according to the following steps:

**Mechanical homogenization → pH correction with NaOH → Ultrasonication → Anaerobically fermentation**

Discontinuous system (multiple batches) was the operation mode of bioreactors. After the biogas production of the first batch is finished (inoculation + fermentation = 21 days) 1/3 of the sludge (1 L) was extracted and replaced with fresh ultrasonicated (alkaline condition) sludge. The biogas amount and organic load were measured and another 1 L of biological digested sludge was extracted and replaced with 1 L of fresh ultrasonicated sludge (normal pH, no alkaline digestion). These treatment cycles of ultrasonic and alkaline ultrasonic digestion are depending on the quality and amount of initial WWTP sludge.

The main obtained results after three weeks of anaerobically biological digestion with (B2 reactor) or without (B1 reactor) ultrasonic sludge pretreatment were:

- The blank B1 bioreactor (feed with old sludge mixture) didn't produce biogas because it was needing a longer period for inoculation compared with B2;

- The B2 reactor (loaded with similar sludge to B1 but ultrasonicated) started to produce biogas after 6 days;
- The biogas production was continuous for two weeks and the total biogas volume was ~ 25 L;
- The biogas amount from test reactor B2 was double compared to the second test with sludge mixture without pH correction (pH test at 6.5).

Figure 1 shows the evolution of the variation of VFAs and global organic load in B2 for one charge of treated sludge according to the above-mentioned conditions.

It can be noted the increase of VFAs content during the first 11 days (4.5 biogas liter) followed by decreasing concurrently with the rise of biogas amount (~20 liters) during the next 10 days. After 16 days there was a little rise in VFAs concentration. The organic load decreased from 28160 mg $O_2$/L to 14080 mg/L (50%) because of the transformation into biogas with 69% methane content.

## REFERENCES

1. Kari F. Brisolara, Yinan Qi, Biosolids and sludge management, Water environment Research, 83, nr. 10, 2011

2. Ahmad Reza Mohammadi, Nasser Mehrdadi, Gholamreza Nabi Bidhendi, Ali Torabian, Excess sludge reduction using ultrasonic waves in biological wastewater treatment, Desalination, 275, 2011

3. Dong-Hoon Kim, Emma Jeong, Sae-Eun Oh, Hang-Sik Shin, Combined (alkaline + ultrasonic) pretreatment effect on sewage sludge disintegration, Water Research, 44, 2010

4. Panyue Zhang, Guangming Zhang, Wei Wang, Ultrasonic treatment of biological sludge: floc disintegration, cell lysis and inactivation, Bioresource Technology, 98, 2007

5. Chang Liu, Bo Xiao, Alain Dauta, Gnifen Peng, Shiming Liu, Zhiquan Hu, Effect of low power ultrasonic radiation on anaerobic biodegradability of sewage sludge, Bioresource Technology, 100, 2009

## Claims

1. The combined process for the pretreatment of the sludge from municipal wastewater treatment plants **has the main characteristic:** it used the ultrasonic cavitation phenomena at low frequency (20 kHz) together with alkaline digestion, in alternate cycles of simple ultrasonication - alkaline digestion - ultrasonication (depends on sludge mixture characteristics), in order to raise the amount of biogas amount, generated in the phase of anaerobic digestion;

2. Treatment method **according to claim 1, characterized by** the application of direct (simple) ultrasonication of the WWTPs sludge which led to a 70% increase in biogas production;

3. Treatment method **according to claim 1, characterized by** the application of ultrasonic field together with alkaline digestion of pH = 10.5 leading to doubling the volume of biogas compared with the simple ultrasonication;

4. Treatment method **according to claim 1, characterized by** the application of ultrasonic field for the treatment of wastewater treatment plant sludge (mainly biological sludge) with or without alkaline digestion in sequential cycles (e.g. one week direct ultrasonication followed by two weeks of alkaline digestion and ultrasonication taking into account specific local conditions) leading to maximum levels of biogas production and the transformation at least of 50% of organic load in biogas.

## Amended claims in accordance with Rule 137(2) EPC.

1. Combined physico-chemical process for pretreatment of biological sludge from municipal wastewater treatment plants, **characterized by** the fact that to improve biogas yields through anaerobic fermentation, the cavitation phenomenon generated by the application of the low-frequency ultrasonic field (20 kHz) and alkaline digestion is used, in successive cycles: alkaline ultrasonication - simple ultrasonication in combinations specific to the sludge quality and treatment conditions in the wastewater treatment plant.

2. Treatment process, according to claim 1, **characterized by** the fact that the application of the ultrasonic field to the pretreatment of the biological sludge, alkalized with NaOH at pH = 10.5, leads to obtaining degrees of sludge solubilization and disintegration 3-4 times higher than in the case of sonication at pH = 6 - 6.5 at a reduced ultrasonication time - 10 min, favorable to increasing the efficiency of the anaerobic fermentation step and the generation of biogas.

3. The treatment process, according to claim 1, is **characterized in that** the application of the ultrasonic field to the pretreatment of biological sludge alkalized with NaOH at pH = 10.5 leads to a duration of the initiation of biogas production after 6 days under anaerobic fermentation conditions at 37,5$^0$C even for the case of an old fermented sludge, stored in aerobic conditions.

4. The treatment process, according to claim 1, is **characterized in that** the application of the ultrasonic field to the pretreatment of biological sludge alkalized with NaOH at pH = 10.5 leads to the doubling of the amount of biogas obtained, compared to that achieved in the case of ultrasonically treated sludge without additional alkalinization.

5. The treatment process, according to claim 1, is **characterized in that** the application of the ultrasonic field to the pretreatment of the biological sludge, alkalized and non-alkalized, in successive cycles (e.g., one week of simple ultrasonic pretreatment followed by two weeks of alkaline ultrasonic pretreatment depending on the specific conditions of the installations industrial plants with continuous operation), leads to the maintenance of constant biogas production at the maximum technological levels (degree of conversion of organic load into biogas of min. 50%).

FIG. 1

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RO 132 382 B1 (INST NATIONAL DE CERCETARE DEZVOLTARE PENTRU ECOLOGIE INDUSTRIALA ECOI) 30 September 2021 (2021-09-30) * pages 2-5 * * claims 1-5 * | 1-5 | INV. C02F11/15 C02F11/04 C02F1/66 |
| X | STEFANESCU MIHAI ET AL: "Ultrasonic Alkaline Pretreatment of Biological Activated Sludge from Wastewater Treatment Plants", REVISTA DE CHIMIE, vol. 70, no. 1, 15 February 2019 (2019-02-15), pages 301-303, XP093089848, RO ISSN: 0034-7752, DOI: 10.37358/RC.19.1.6904 * pages 301-303 * | 1-5 | ADD. C02F11/14 C02F1/36 |
| X | STEFANESCU MIHAI ET AL: "Improvement of Active Biological Sludge Quality for Anaerobic Digestion Phase in the Wastewater Treatment Plant by Ultrasonic Pretreatment", REVISTA DE CHIMIE, vol. 69, no. 1, 31 January 2018 (2018-01-31), pages 31-33, XP093089854, RO ISSN: 0034-7752, DOI: 10.37358/RC.18.1.6039 * pages 31-33 * | 1-5 | |

-----

-----

-----

-/--

TECHNICAL FIELDS
SEARCHED (IPC)

C02F

The present search report has been drawn up for all claims

| Place of search | Date of completion of the search | Examiner |
|---|---|---|
| The Hague | 16 November 2023 | Rozanska, Agnieszka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 17 3342

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIAN XINBO ET AL: "Insights on the solubilization products after combined alkaline and ultrasonic pre-treatment of sewage sludge", JOURNAL OF ENVIRONMENTAL SCIENCES, vol. 29, 5 January 2015 (2015-01-05), pages 97-105, XP093089891, NL ISSN: 1001-0742, DOI: 10.1016/j.jes.2014.07.024 * abstract * * pages 99,100 * * pages 103-104 * | 1-5 | |
| X | UMA RANI R. ET AL: "Enhancing the anaerobic digestion potential of dairy waste activated sludge by two step sono-alkalization pretreatment", ULTRASONICS SONOCHEMISTRY, vol. 21, no. 3, 21 November 2013 (2013-11-21), pages 1065-1074, XP093089907, GB ISSN: 1350-4177, DOI: 10.1016/j.ultsonch.2013.11.007 * abstract * * page 1066 * * page 1073 – page 1074 * | 1-5 | **TECHNICAL FIELDS SEARCHED (IPC)** |
| X | DE 10 2020 003156 A1 (BRAEUTIGAM HANS JUERGEN [DE]; DOROW VOLKER [DE]) 2 December 2021 (2021-12-02) * paragraphs [0006] – [0022] * | 1-5 | |
| X | KR 2008 0089825 A (G & G IN TECH CO LTD [KR]) 8 October 2008 (2008-10-08) * paragraphs [0020] – [0078] * | 1-5 | |

The present search report has been drawn up for all claims

| Place of search | Date of completion of the search | Examiner |
|---|---|---|
| The Hague | 16 November 2023 | Rozanska, Agnieszka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3342

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | Publication date | Patent family member(s) | Publication date |
|---|---|---|---|
| RO 132382        B1 | 30-09-2021 | ------------------------------------ |  |
| DE 102020003156 A1 | 02-12-2021 | NONE |  |
| KR 20080089825  A | 08-10-2008 | NONE |  |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KARI F. BRISOLARA ; YINAN QI.** Biosolids and sludge management. *Water environment Research,* 2011, vol. 83 (10
- **AHMAD REZA MOHAMMADI ; NASSER MEHRDADI ; GHOLAMREZA NABI BIDHENDI ; ALI TORABIAN.** Excess sludge reduction using ultrasonic waves in biological wastewater treatment. *Desalination,* vol. 275, 2011
- **DONG-HOON KIM ; EMMA JEONG ; SAE-EUN OH ; HANG-SIK SHIN.** Combined (alkaline + ultrasonic) pretreatment effect on sewage sludge disintegration. *Water Research,* 2010, vol. 44

- **PANYUE ZHANG ; GUANGMING ZHANG ; WEI WANG.** Ultrasonic treatment of biological sludge: floc disintegration, cell lysis and inactivation. *Bioresource Technology,* 2007, vol. 98
- **CHANG LIU ; BO XIAO ; ALAIN DAUTA ; GNIFEN PENG ; SHIMING LIU ; ZHIQUAN HU.** Effect of low power ultrasonic radiation on anaerobic biodegradability of sewage sludge. *Bioresource Technology,* 2009, vol. 100